# EUROPÄISCHE PATENTANMELDUNG

(11) **EP 4 472 222 A1**
(43) Veröffentlichungstag der Anmeldung: **04.12.2024**
(21) Anmeldenummer: 24173752.7
(22) Anmeldetag: 02.05.2024
(51) Int. Cl.: H04N 23/60, H04N 23/63

(54) **DATENBRILLE FÜR EINE BEWEGTBILDKAMERA**

(30) Priorität: 31.05.2023 DE 102023114207
(71) Anmelder: Arnold & Richter Cine Technik GmbH & Co. Betriebs KG, 80807 München (DE)
(72) Erfinder: Michael, KOPPETZ, 81669 München (DE)
(74) Vertreter: Manitz Finsterwald Patent- und Rechtsanwaltspartnerschaft mbB

(57) **Zusammenfassung**

Datenbrille für eine Bewegtbildkamera, mit einem Dateneingang zum Empfangen von Kamerainformationen, die Statusinformationen der Bewegtbildkamera, Konfigurationsinformationen der Bewegtbildkamera und/oder aufgenommene Bilder der Bewegtbildkamera umfassen; einer Anzeigeeinrichtung, die dazu ausgebildet ist, eine Darstellung der empfangenen Kamerainformationen anzuzeigen; und einer Steuereinrichtung, die dazu ausgebildet ist, eine Positionsbeziehung zu ermitteln, die eine Position und/oder Ausrichtung der Datenbrille relativ zu der Bewegtbildkamera angibt, und eine Position der Darstellung der empfangenen Kamerainformationen an der Anzeigeeinrichtung basierend auf der Positionsbeziehung anzupassen.

## Beschreibung

Die Erfindung bezieht sich auf eine Datenbrille für eine Bewegtbildkamera, ein Bewegtbildkamerasystem sowie ein Verfahren zum Anzeigen von Kamerainformationen.

Bewegtbildkameras dienen dazu, mittels eines elektronischen Bildsensors eine Bewegtbildsequenz aufzunehmen, also eine Folge von Bildern, und diese Bewegtbildsequenz zu speichern oder auszugeben. Herkömmliche elektronische Bewegtbildkameras sind häufig mit einer oder mehreren Anzeigeeinheiten ausgestattet, die einem Kameramann ermöglichen, aufgenommene Bilder und/oder zusätzlich eingeblendete Informationen zu betrachten. Zum Teil sind diese Anzeigeeinheiten auch mit Bedienelementen ausgestattet und bilden ein Teil der Benutzeroberfläche der Bewegtbildkamera.

Man unterscheidet zwischen Anzeigeeinheiten, die aus einigem Abstand betrachtet werden können und im Folgenden als "Display" bezeichnet werden, und solche, die mit einer augennahen, meist vergrößernden Optik ausgestattet sind und im Folgenden als "Sucher" bezeichnet werden.

Displays werden häufig direkt im Kameragehäuse integriert, wobei auch eigenständige Einheiten bekannt sind, die über geeignete Haltevorrichtungen an der Bewegtbildkamera befestigt werden können. Häufig verfügt eine Bewegtbildkamera über mehrere Displays, die jeweils einen eigenen Informationsgehalt wiedergeben.

Sucher werden dagegen in der Regel zur Ausrichtung und Nachführung der Bewegtbildkamera verwendet. In einer üblichen Ausführung ist der Sucher fest mit der Bewegtbildkamera verbunden und bietet eine Blickrichtung, die im Wesentlichen parallel zur Aufnahmerichtung der Bewegtbildkamera verläuft. Des Weiteren sind Sucher oftmals mit einer sogenannten Augenmuschel ausgestattet, die einen lichtdichten Abschluss zur Augenhöhle des Benutzers bildet und das Eindringen von Fremdlicht verhindert. Solche Ausführungen haben den zusätzlichen Effekt, dass der Benutzer einen festen geometrischen Bezug zur Bewegtbildkamera bekommt. Damit entsteht der Eindruck, dass das Objektiv der Bewegtbildkamera ein Fortsatz des eigenen Auges ist, was die Ausrichtung und Führung der Bewegtbildkamera erleichtert.

Die hier erwähnten Anzeigeeinheiten haben jedoch den Nachteil, dass diese meist starr hinsichtlich des Anzeigeinhalts sind. Entweder zeigt eine Anzeigeeinheit nur einen spezifischen Inhalt an, sodass eine Vielzahl von Anzeigeeinheiten erforderlich ist, um die Vielzahl der Bild- und Statusdaten der Bewegtbildkamera anzuzeigen, oder der Bediener der Bewegtbildkamera muss zwischen unterschiedlichen Darstellungsformen der Anzeigeeinheit umschalten. Ferner müssen aufgrund des begrenzten Platzes an den Anzeigeeinheiten bzw. an der Bewegtbildkamera oftmals Kompromisse, beispielsweise hinsichtlich der Menge des angezeigten Inhalts, eingegangen werden.

Physikalische Anzeigeeinheiten beanspruchen außerdem Platz am Kamerakörper und beeinflussen damit die Bauform der Kamera. Die Größe, die für eine gute Betrachtung der Anzeige erforderlich ist, steht häufig im Widerspruch zu der guten Handhabbarkeit der Kamera. Auch muss berücksichtigt werden, dass für verschiedene Anwendungen verschiedene Positionen und Ausrichtungen der Anzeigeeinheiten erforderlich sein können. Diesem Umstand wird häufig durch komplexe, gelenkige Haltevorrichtungen Rechnung getragen, was zu erhöhten Kosten und einer erhöhten Komplexität bei der Herstellung derartiger Bewegtbildkameras führt.

Es ist eine der Erfindung zugrundeliegende Aufgabe, eine Datenbrille für eine Bewegtbildkamera, ein entsprechendes Bewegtbildkamerasystem sowie ein entsprechendes Verfahren bereitzustellen, welche die Anzeige von Kamerainformationen erleichtern.

Diese Aufgabe wird durch eine Datenbrille nach Anspruch 1, ein Bewegtbildkamerasystem nach Anspruch 11 sowie durch ein Verfahren nach Anspruch 15 gelöst.

Die Erfindung betrifft eine Datenbrille für zumindest eine Bewegtbildkamera, mit:
einem Dateneingang zum Empfangen von Kamerainformationen, die Statusinformationen der Bewegtbildkamera, Konfigurationsinformationen der Bewegtbildkamera und/oder aufgenommene Bilder der Bewegtbildkamera umfassen;
einer Anzeigeeinrichtung, die dazu ausgebildet ist, eine Darstellung der empfangenen Kamerainformationen anzuzeigen; und
einer Steuereinrichtung, die dazu ausgebildet ist, eine Positionsbeziehung zu ermitteln, die eine Position und/oder Ausrichtung der Datenbrille relativ zu der Bewegtbildkamera angibt, und eine Position der Darstellung der empfangenen Kamerainformationen an der Anzeigeeinrichtung basierend auf der Positionsbeziehung anzupassen.

Mit anderen Worten wird die Position der Darstellung der empfangenen Kamerainformationen an der Anzeigeeinrichtung - und somit die Wahrnehmung der Darstellung durch den Benutzer der Datenbrille - basierend auf dem Blickwinkel des Benutzers der Datenbrille und/oder der Position der Datenbrille relativ zu der Bewegtbildkamera und/oder der Kopfposition des Benutzers relativ zu der Bewegtbildkamera festgelegt. Eine jeweilige Position der Datenbrille (insbesondere Position im Raum) relativ zu der Bewegtbildkamera und/oder Ausrichtung der Datenbrille (insbesondere Winkelstellung im Raum) relativ zu der Bewegtbildkamera kann somit einer jeweiligen Positionsbeziehung entsprechen, und die Datenbrille kann die Darstellung der empfangenen Kamerainformationen an einer für diese Positionsbeziehung berechneten Position an der Anzeigeeinrichtung anzeigen.

Die Erfindung ermöglicht somit ein Anzeigen der Darstellung der empfangenen Kamerainformationen in einer vorbestimmten räumlichen Beziehung zu der Bewegtbildkamera. Die Datenbrille kann beispielsweise eine virtuelle Anzeige erzeugen, die aus der Sicht des Benutzers der Datenbrille scheinbar positionsfest mit der Bewegtbildkamera verbunden ist. Die Darstellung der Kamerainformationen an der Anzeigeeinrichtung kann derart angezeigt werden, als sei sie im Bezug zur Bewegtbildkamera ortsfest im Raum angeordnet (an der Bewegtbildkamera oder entfernt von der Bewegtbildkamera), wobei sich bei einer Kopfbewegung des Benutzers, d.h. bei einer Veränderung der Position und/oder Ausrichtung der Datenbrille, der Blickwinkel des Benutzers der Datenbrille auf die entsprechende Darstellung zu ändern scheint.

Die Anzeige von Kamerainformationen mittels einer Datenbrille hat den Vorteil, dass die angezeigte Darstellung der Kamerainformationen, insbesondere die Größe, Form und/oder Position der Darstellung, flexibel an die jeweilige Betrachtungsperspektive des Benutzers der Datenbrille angepasst werden kann. Ferner kann durch die Nutzung einer Datenbrille bzw. durch die Nutzung virtueller Anzeigen anstelle von physischen Anzeigen an der Bewegtbildkamera im Wesentlichen das gesamte Blickfeld des Benutzers der Datenbrille als potentielle Anzeigefläche genutzt werden. Gleichzeitig entfällt die Notwendigkeit für das Anbringen von kostspieligen physischen Anzeigen an der Bewegtbildkamera. Da es sich bei den Anzeigen der Datenbrille nur um virtuelle Anzeigen handelt, wird außerdem die Anpassung der Anzeige an Präferenzen des Benutzers zudem erleichtert. Der Benutzer der Datenbrille kann beispielweise vorab einstellen, welche Kamerainformationen mittels der Datenbrille angezeigt werden sollen bzw. welche Kamerainformationen ausgeblendet werden sollen. Mit anderen Worten kann auch der Inhalt der angezeigten Darstellung der Kamerainformationen flexibel angepasst werden. Die Kamerainformationen können insbesondere numerische oder textliche Daten sein.

Bei manchen Ausführungsformen kann die Anzeigeeinrichtung derart, insbesondere bereichsweise teilweise oder vollständig, transparent sein, dass eine reale Umgebung der Datenbrille durch die Anzeigeeinrichtung hindurch wahrnehmbar ist. Bei manchen Ausführungsformen kann die Bewegtbildkamera durch die Datenbrille hindurch sichtbar sein. Beispielsweise kann die Darstellung der Kamerainformationen in einem solchen Fall als Überlagerung auf dem Kameragehäuse der Bewegtbildkamera angezeigt werden, oder in einem Bereich der Anzeigeeinrichtung, in dessen Verlängerung die Bewegtbildkamera gerade nicht angeordnet ist, oder teilweise als Überlagerung auf dem Kameragehäuse und teilweise versetzt zu der optischen Abbildung der Bewegtbildkamera durch die Anzeigeeinrichtung hindurch.

Das Ermitteln der Positionsbeziehung kann umfassen, dass die Steuereinrichtung die Positionsbeziehung als einen unmittelbar verwendbaren Wert empfängt, insbesondere über den Dateneingang der Datenbrille. Alternativ hierzu kann das Ermitteln der Positionsbeziehung umfassen, dass die Steuereinrichtung die Positionsbeziehung teilweise oder vollständig berechnet, insbesondere aus Signalen eines Sensors der Datenbrille und/oder eines Sensors der Bewegtbildkamera oder einer separaten Vorrichtung. Ferner kann die Positionsbeziehung kontinuierlich aktualisiert werden, um eine sich verändernde Position und/oder Ausrichtung der Datenbrille (also eine Bewegung der Datenbrille) relativ zu der Bewegtbildkamera zu erfassen. Beispielsweise kann der empfangene oder berechnete Wert der Positionsbeziehung in regelmäßigen Zeitabständen empfangen oder berechnet werden.

Die Steuereinrichtung der Datenbrille kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA).

Ferner kann die Anzeigeeinrichtung beispielsweise eine oder mehrere der folgenden Einrichtungen umfassen: ein Display, insbesondere ein Flüssigkristalldisplay, Brillengläser, insbesondere Smart Glasses, einen Projektor oder ein Glasprisma. Die Anzeigeeinrichtung kann für eine Darstellung der empfangenen Kamerainformationen zur visuellen Wahrnehmung mit wenigstens einem Auge des Benutzers der Datenbrille ausgebildet und angeordnet sein. Hierfür kann zumindest ein Teil der Anzeigeeinrichtung im Sichtfeld des Benutzers angeordnet sein, beispielsweise entsprechend der üblichen Anordnung eines Brillenglases vor einem jeweiligen Auge des Benutzers.

Die Datenbrille kann eine Halteeinrichtung zum Befestigen der Datenbrille an dem Kopf eines Benutzers aufweisen, beispielsweise einen flexiblen Haltegurt und/oder ein Brillengestell.

Weitere Ausführungsformen sind der Beschreibung, den Unteransprüchen sowie den Zeichnungen zu entnehmen.

Bei manchen Ausführungsformen umfasst die Datenbrille zumindest einen Kameraerfassungssensor, der dazu ausgebildet ist, die Position und/oder Ausrichtung der Datenbrille relativ zu der Bewegtbildkamera zu erfassen, wobei die Steuereinrichtung dazu ausgebildet ist, die Positionsbeziehung basierend auf Signalen des Kameraerfassungssensors zu ermitteln. Beispielsweise kann die Steuereinrichtung die Positionsbeziehung durch direkte Verwendung oder durch Auswertung der Signale des Kameraerfassungssensors ermitteln. Die Steuereinrichtung kann beispielsweise basierend auf den Signalen des Kameraerfassungssensors ein dreidimensionales Modell erzeugen, in dem basierend auf den erfassten Signalen des Kameraerfassungssensors eine virtuelle Datenbrille und/oder eine virtuelle Bewegtbildkamera nachgebildet wird, wobei basierend auf der Positionsbeziehung zwischen der virtuellen Datenbrille und der virtuellen Bewegtbildkamera, d.h. Position und/oder Ausrichtung der virtuellen Datenbrille relativ zur Position und/oder Ausrichtung der virtuellen Bewegtbildkamera, die Positionsbeziehung zwischen der tatsächlichen Datenbrille und der tatsächlichen Bewegtbildkamera ermittelt werden kann. Insbesondere kann dabei die Position des Kameraerfassungssensors an der Datenbrille bekannt bzw. vorgegeben sein, sodass die Position des Kameraerfassungssensors als Ursprungspunkt für die Erstellung eines Raummodells verwendet werden kann. Des Weiteren kann die Positionsbeziehung mittels bekannter Triangulations- oder Trackingverfahren und -algorithmen oder durch andere geeignete Verfahren ermittelt werden.

Bei manchen Ausführungsformen weist der Kameraerfassungssensor eine Hilfskamera auf, die dazu ausgebildet ist, zumindest eine Markierung an dem Kameragehäuse der Bewegtbildkamera zu erfassen. Insbesondere kann die Markierung eine optische Markierung sein. Beispielsweise kann die optische Markierung einen QR-Code, einen anderen Datencode oder ein beliebiges wiedererkennbares Muster umfassen, welcher mittels des Kameraerfassungssensors auf einfache und eindeutige Weise erkannt werden kann. Die Markierung kann nicht nur eine Position im Raum, sondern auch eine Winkelstellung definieren, beispielsweise durch ein nicht rotationssymmetrisches Muster. Die Markierung kann darüber hinaus einer vordefinierten Position und/oder Ausrichtung auf dem Kameragehäuse zugeordnet sein. Die vordefinierte Position und/oder Ausrichtung kann beispielsweise der Steuereinrichtung bekannt sein oder von der Steuereinrichtung empfangen werden. Die Steuereinrichtung kann beispielsweise in Reaktion auf die Erfassung einer Markierung Identifizierungsinformationen, insbesondere hinsichtlich der vordefinierten Position und/oder Ausrichtung der Markierung auf der Bewegtbildkamera bzw. dem Kameragehäuse, einem Kameramodell oder anderen geeigneten Aspekten der Bewegtbildkamera, empfangen. Insbesondere können die Identifizierungsinformationen in der Markierung selbst eingebettet sein. Die Steuereinrichtung kann dazu ausgebildet sein, die in der Markierung eingebetteten Identifizierungsinformationen auszulesen bzw. zu entschlüsseln. Basierend auf der vordefinierten Position und/oder Ausrichtung der Markierung kann die Steuereinrichtung die Positionsbeziehung zwischen der Datenbrille und der Bewegtbildkamera ermitteln. Alternativ kann die Steuereinrichtung die Positionsbeziehung ohne Informationen über die vordefinierte Position und/oder Ausrichtung der Markierung ermitteln. Beispielsweise kann die Steuereinrichtung die Positionsbeziehung ausschließlich basierend auf den Signalen des Kameraerfassungssensors ermitteln.

Insbesondere können mehrere, beispielsweise zwei, drei oder vier, Markierungen an dem Kameragehäuse vorhanden sein, um die Genauigkeit der Ermittlung der Positionsbeziehung zu erhöhen. Beispielsweise kann die Positionsbeziehung unter Verwendung der mehren Markierungen mittels Triangulationsverfahren ermittelt werden.

Zusätzlich kann die Datenbrille beispielsweise einen statischen und/oder dynamischen Beschleunigungssensor aufweisen, um die Ausrichtung der Datenbrille im Raum relativ zu der Richtung der Schwerkraft zu bestimmen. Der Beschleunigungssensor kann beispielsweise piezoresistive, piezoelektrische und/oder kapazitive Beschleunigungssensoren umfassen. Die Datenbrille kann ferner ein Gyroskop und/oder ein Magnetometer umfassen, wobei das Gyroskop und/oder Magnetometer gemeinsam mit dem Beschleunigungssensor zur Bestimmung der Ausrichtung der Datenbrille verwendet werden.

Alternativ oder zusätzlich zu dem genannten Kameraerfassungssensor kann ein Brillenerfassungssensor, z.B. eine Hilfskamera, zur Ermittlung der Position und/oder Ausrichtung der Datenbrille relativ zu der Bewegtbildkamera an der Bewegtbildkamera oder an einer separaten Position vorgesehen sein. In einem solchen Fall kann ferner zumindest eine Markierung an der Datenbrille vorgesehen sein, wobei der Brillenerfassungssensor die zumindest eine Markierung erfassen kann, um die Positionsbeziehung zwischen der Datenbrille und der Bewegtbildkamera zu ermitteln. Die vorstehenden Ausführungen zu dem Kameraerfassungssensor und den Markierungen an der Bewegtbildkamera gelten entsprechend auch für den Brillenerfassungssensor und den Markierungen an der Datenbrille (z.B. Ausbildung als optische Markierung).

Bei manchen Ausführungsformen ist, zumindest in einer Überlagerungsbetriebsart der Datenbrille, die Anzeigeeinrichtung derart transparent, dass zumindest benachbart zu der Darstellung der empfangenen Kamerainformationen eine reale Umgebung der Datenbrille durch die Anzeigeeinrichtung hindurch wahrnehmbar ist, wobei die Steuereinrichtung dazu ausgebildet ist, die Position der Darstellung der empfangenen Kamerainformationen an der Anzeigeeinrichtung derart anzupassen, dass die Darstellung als einem Kameragehäuse der Bewegtbildkamera überlagert erscheint. Hierfür kann die Anzeigeeinrichtung in dem jeweiligen Bereich teilweise oder vollständig, transparent sein. Bei manchen Ausführungsformen kann die Darstellung der empfangenen Kamerainformationen einer vorbestimmten Projektionsfläche des Kameragehäuses überlagert erscheinen. Beispielsweise kann die Darstellung der empfangenen Kamerainformationen auf einer vorbestimmten Fläche, d.h. der Projektionsfläche, des Kameragehäuses erscheinen. Die Projektionsfläche kann bevorzugt eben und/oder in einem einheitlichen Farbton ausgeführt sein, so dass die Erkennung der Projektionsfläche durch die Datenbrille und insbesondere durch den Kameraerfassungssensor der Datenbrille erleichtert wird. Die Darstellung der überlagerten Daten erscheinen dem Benutzer somit wie eine Projektion auf der entsprechenden Fläche des Kameragehäuses. Insofern bedeutet die im Zusammenhang mit der Erfindung genannte Projektionsfläche nicht, dass auf diese Fläche optisch projiziert wird, sondern der Begriff ist als virtuelle Projektion zu verstehen. Die Projektionsfläche des Kameragehäuses kann auch als virtuelle Projektionsfläche oder als Darstellungsfläche bezeichnet werden.

Die Darstellung der empfangenen Kamerainformationen kann bei manchen Ausführungsformen dem Kameragehäuse der Bewegtbildkamera überlagert erscheinen, zumindest solange die Bewegtbildkamera sich im Sichtfeld der Datenbrille befindet. Beispielsweise können die Kamerainformationen an für den Benutzer der Bewegtbildkamera gewohnten bzw. zu erwartenden Positionen an dem Kameragehäuse der Bewegtbildkamera dargestellt werden. Die gewohnten Positionen sind beispielsweise Positionen, an denen entsprechende Kamerainformationen regelmäßig bei herkömmlichen Bewegtbildkameras vorgesehen sind.

Zusätzlich oder alternativ kann die Darstellung der empfangenen Kamerainformationen an der Anzeigeeinrichtung in einem Bereich erfolgen, in dem die Bewegtbildkamera nicht durch die Anzeigeeinrichtung hindurch sichtbar ist. Dieser Bereich an der Anzeigeeinrichtung wird im Folgenden als kamerafreier Bereich bezeichnet.

Die Darstellung der Kamerainformationen kann ferner derart angezeigt werden, als sei sie einer festen Position im Raum zugeordnet. Beispielsweise kann der Benutzer der Datenbrille mittels einer Benutzereingabe die Darstellung der Kamerainformationen einer festen Position im Raum zuordnen.

Ferner kann die Darstellung der Kamerainformationen in dem kamerafreien Bereich positionsfest mit Bezug zur Position des Kameragehäuses der Bewegtbildkamera, insbesondere mit Bezug zu einem Bezugspunkt, z.B. der Markierung, an dem Kameragehäuse, angeordnet sein. Beispielsweise kann die Darstellung eine virtuelle Anzeigeeinheit umfassen, die scheinbar positionsfest mit der Kamera verbunden ist.

Bei manchen Ausführungsformen ist die Anzeigeeinrichtung wahlweise zwischen einem bereichsweise transparenten Zustand, in dem eine reale Umgebung der Datenbrille durch die Anzeigeeinrichtung hindurch wahrnehmbar ist, und einem bereichsweise opaken Zustand umschaltbar. Zumindest in einer Überdeckungsbetriebsart der Datenbrille kann die Steuereinrichtung dazu ausgebildet sein, die Anzeigeeinrichtung in einem Bereich, welcher der Position der Darstellung der empfangenen Kamerainformationen entspricht, zumindest teilweise opak und in anderen Bereichen transparent zu schalten. Beispielsweise kann die Anzeigeeinrichtung in einem Bereich, welcher der Position der Darstellung der empfangenen Kamerainformationen entspricht, eine Lichtdurchlässigkeit mit einem Wert im Bereich von 0% bis 30% aufweisen, beispielsweise einen Wert von 0%, 10%, 20% oder 30%. Ferner können einzelne Darstellungen von Kamerainformationen, z.B. allgemeine Statusinformationen der Kamera, an der Anzeigeeinrichtung teilweise opak angezeigt werden, während hingegen andere Darstellungen, z.B. Konfigurationseinstellungen und/oder aufgenommene Bilder der Bewegtbildkamera, vollständig opak angezeigt werden. Hierdurch kann die Aufmerksamkeit des Benutzers auf eine für eine bestimmte Situation oder Aufnahme relevante Information gerichtet werden.

Bei manchen Ausführungsformen ist die Datenbrille dazu ausgebildet, wahlweise eine Beobachtungsbetriebsart einzunehmen, die der genannten Überlagerungsbetriebsart oder der genannten Überdeckungsbetriebsart der Datenbrille entsprechen kann. In der Beobachtungsbetriebsart ist die Anzeigeeinrichtung derart zumindest teilweise transparent, dass eine reale Umgebung der Datenbrille durch die Anzeigeeinrichtung hindurch wahrnehmbar ist, wobei die Steuereinrichtung die Anzeigeeinrichtung zum Anzeigen einer Darstellung von Statusinformationen und/oder Konfigurationsinformationen der Bewegtbildkamera als die empfangenen Kamerainformationen ansteuert. Ferner kann die Datenbrille dazu ausgebildet sein, wahlweise eine Sucherbetriebsart einzunehmen, in der die Steuereinrichtung die Anzeigeeinrichtung zum Anzeigen einer Darstellung von aufgenommenen Bildem der Bewegtbildkamera als die empfangenen Kamerainformationen, insbesondere vor einem opaken Hintergrund, insbesondere in Echtzeit, ansteuert.

In der Beobachtungsbetriebsart ist der Benutzer in der Lage, die Umgebung durch die Datenbrille hindurch zu beobachten bzw. wahrzunehmen, während dem Benutzer die Darstellung von Statusinformationen und/oder Konfigurationsinformationen der Bewegtbildkamera an der Anzeigeeinrichtung derart angezeigt werden, als seien sie ein Teil der Umgebung. In der Sucherbetriebsart hingegen wird dem Benutzer das aufgenommene Bild der Bewegtbildkamera angezeigt. Insbesondere wird in der Sucherbetriebsart an der Anzeigeeinrichtung nur das aufgenommene Bild der Bewegtbildkamera angezeigt. In der Sucherbetriebsart wird somit eine Sucherfunktion einer herkömmlichen Bewegtbildkamera emuliert, bei der ein Sucher am Kameragehäuse befestigt ist. Grundsätzlich kann die Datenbrille auch in einer Kombination der beiden Betriebsarten operieren, in der dem Benutzer beispielsweise sowohl das aufgenommene Bild der Bewegtbildkamera als auch Status- und/oder Konfigurationsinformationen an der Anzeigeeinrichtung angezeigt werden.

Bei manchen Ausführungsformen ist die Steuereinrichtung dazu ausgebildet, aufgrund eines Signals eines Sucherbetriebsart-Auswahlschalters oder eines Sucherbetriebsart-Auswahlsensors die Sucherbetriebsart einzunehmen. Der Sucherbetriebsart-Auswahlsensor kann dazu ausgebildet sein, eine Berührung zwischen der Datenbrille und der Bewegtbildkamera und/oder eine Annäherung der Datenbrille an die Bewegtbildkamera in eine vorbestimmte Minimaldistanz zu erfassen (d.h. eine Annäherung, die der vorbestimmten Minimaldistanz oder einer geringeren Entfernung entspricht). Das Signal des Sucherbetriebsart-Auswahlschalters kann beispielsweise durch händisches Betätigen des Sucherbetriebsart-Auswahlschalters erzeugbar sein. Das Signal des Sucherbetriebsart-Auswahlsensors kann beispielsweise durch eine Berührung zwischen der Datenbrille und der Bewegtbildkamera und/oder einer Annäherung der Datenbrille an die Bewegtbildkamera in eine vorbestimmte Minimaldistanz erzeugt werden. Insbesondere kann das Signal des Sucherbetriebsart-Auswahlsensors an die Steuereinrichtung übermittelt werden, welche basierend auf dem Signal die Datenbrille automatisch in die Sucherbetriebsart umschalten kann.

Der Sucherbetriebsart-Auswahlschalter kann z.B. einen Taster, Schiebeschalter, Softkey oder virtuellen Schalter eines Displays umfassen. Der Sucherbetriebsart-Auswahlsensor kann einem der bereits genannten Sensoren, z.B. dem Kameraerfassungssensor oder dem Brillenerfassungssensor, entsprechen oder andere Sensoren umfassen (z.B. einen optischen oder kapazitiven Näherungssensor). Grundsätzlich kann eine Berührung zwischen der Datenbrille und der Bewegtbildkamera und/oder eine Annäherung der Datenbrille an die Bewegtbildkamera in die vorbestimmte Minimaldistanz auch basierend auf einer Mehrzahl von Sensoren, insbesondere der hierin genannten Sensoren, ermittelt werden. Der Sucherbetriebsart-Auswahlschalter und/oder Sucherbetriebsart-Auswahlsensor kann ferner an der Datenbrille und/oder an der Bewegtbildkamera angeordnet sein.

Die hierin erwähnten Sensoren können jeweils z.B. einen optischen Sensor, insbesondere eine Kamera, einen Funk-, einen Induktions-, einen Ultraschall-, einen Magnetsensor oder einen kapazitiven Sensor umfassen.

In der Sucherbetriebsart kann die Datenbrille als binokularer oder als monokularer Sucher verwendet werden. Im Falle eines monokularen Suchers wird die Darstellung der aufgenommenen Bilder des Bewegtbildkamera beispielsweise nur einem Auge des Benutzers der Datenbrille angezeigt, während im Falle eines binokularen Suchers die Darstellung der aufgenommenen Bilder beiden Augen des Benutzers der Datenbrille angezeigt werden. Im Falle des monokularen Suchers kann der Blick auf die Umgebung gezielt ausgeblendet werden. Dies kann z.B. über die Anzeigeeinrichtung geschehen, indem die Anzeigeeinrichtung in einen, insbesondere vollständig, opaken Zustand schaltet. Beispielsweise wird einem Auge des Benutzers der Datenbrille das aufgenommene Bild angezeigt, während eine Lichtmenge des auf das andere Auge treffenden Lichts aufgrund der Lichtundurchlässigkeit der Anzeigeeinrichtung minimiert wird. Alternativ kann eine einklappbare, undurchsichtige Blende an der Datenbrille vorgesehen sein, die in eingeklapptem Zustand den Blick auf die Umgebung verhindert. Alternativ kann eine undurchsichtige Blende fest an der Bewegtbildkamera angebracht sein, so dass ein Auge des Benutzers abgedeckt wird, wenn er seinen Kopf bzw. die Datenbrille zum Einschalten der Sucherbetriebsart in einer hierfür erforderlichen Position an der Blende positioniert. Die Sucherbetriebsart ermöglicht es dem Benutzer somit, den gewohnten körperlichen und geometrischen Bezug zur Kamera herzustellen, den er benötigt, um die Kamera in gewohnter Weise auszurichten und zu führen. Gleichzeitig hat der Benutzer die Flexibilität, je nach Bedarf auch in einiger Entfernung von der Kamera das Sucherbild betrachten zu können.

Bei manchen Ausführungsformen umfasst die Anzeigeeinrichtung eine erste Anzeigeschicht und eine zweite Anzeigeschicht, wobei die erste Anzeigeschicht dazu ausgebildet ist, die Darstellung der empfangenen Kamerainformationen anzuzeigen, und wobei die zweite Anzeigeschicht zumindest bereichsweise zwischen einem transparenten und einem opaken Zustand umschaltbar ist. Insbesondere kann die zweite Anzeigeschicht entlang der Betrachtungsrichtung hinter der ersten Anzeigeschicht angeordnet sein. Die erste Anzeigeschicht und die zweite Anzeigeschicht können generell (d.h. in einem jeweiligen Grundzustand) transparent sein. Die zweite Anzeigeschicht kann auf die in der ersten Anzeigeschicht dargestellten Inhalte angepasst sein. Beispielsweise kann die zweite Anzeigeschicht in Bereichen, die der Darstellung der Kamerainformationen auf der ersten Anzeigeschicht überlagert sind, in einen opaken Zustand und in den verbleibenden Bereichen in einen transparenten Zustand schalten. In der Sucherbetriebsart kann die zweite Anzeigeschicht beispielsweise in einem im Wesentlichen vollständig opaken Zustand betrieben werden, wobei die erste Anzeigeschicht das aufgenommene Bild der Bewegtbildkamera anzeigt.

Bei manchen Ausführungsformen umfasst die Anzeigeeinrichtung eine Anzeigeschicht, insbesondere die genannte erste Anzeigeschicht, und einen teildurchlässigen Spiegel, der dazu abgebildet ist, eine von der Anzeigeschicht angezeigte Darstellung der empfangenen Kamerainformationen in das Sichtfeld eines Benutzers der Datenbrille einzuspiegeln.

Bei manchen Ausführungsformen kann die Anzeigeeinrichtung ferner einen Projektor und/oder eine Optik, z.B. einen Waveguide, umfassen, die dazu ausgebildet ist, die Darstellung der angezeigten Informationen direkt auf die Netzhaut des Auges des Benutzers zu projizieren.

Bei manchen Ausführungsformen kann die Steuereinrichtung dazu ausgebildet sein, die Darstellung der empfangenen Kamerainformationen an der Anzeigeeinrichtung, insbesondere die Größe der Darstellung und/oder eine Kamerainformationsart, basierend auf einer Distanz zwischen der Datenbrille und der Bewegtbildkamera anzupassen. Die Kamerainformationsarten umfassen beispielsweise die bereits erwähnten Statusinformationen, Konfigurationsinformationen und/oder aufgenommene Bilder der Bewegtbildkamera. Jedoch können auch Untergruppen der vorstehend genannten Kamerainformationsarten als eine eigene Kamerainformationsart verstanden werden. Beispielsweise können die Konfigurationsinformationen in unterschiedliche Untergruppen von Konfigurationsinformationen unterteilt werden, welche für unterschiedliche Benutzergruppen von unterschiedlicher Relevanz sind. Einer jeweiligen Benutzergruppe können somit der Benutzergruppe entsprechende Kamerakonfigurationsinformationen angezeigt werden. Die Distanz zwischen der Datenbrille und der Bewegtbildkamera kann beispielsweise mittels eines der vorstehend genannten Sensoren oder mittels eines hierfür vorgesehenen Distanzsensors ermittelt werden.

Die Darstellung der Kamerainformationen kann beispielsweise für Benutzer, welche einen größeren Abstand zur Bewegtbildkamera haben, im Verhältnis zur Bewegtbildkamera größer angezeigt werden, als für Benutzer, welche einen kleineren Abstand zur Bewegtbildkamera haben. Insbesondere kann die Datenbrille dazu konfiguriert sein, dem Benutzer basierend auf einer Ermittlung, dass sich die Distanz zwischen der Datenbrille und der Bewegtbildkamera in einem vordefinierten Distanzbereich befindet, eine dem vordefinierten Distanzbereich zugeordnete Art der Kamerainformationen anzuzeigen. Beispielsweise kann eine Mehrzahl von Distanzbereichen festgelegt sein, welchen eine jeweilige, insbesondere unterschiedliche, Art der Kamerainformationen zugeordnet ist.

Bei manchen Ausführungsformen kann die Steuereinrichtung dazu ausgebildet sein, die Position der Darstellung der empfangenen Kamerainformationen an der Anzeigeeinrichtung ferner basierend auf einer Benutzereingabe anzupassen. Die Datenbrille kann beispielsweise eine Eingabeeinrichtung aufweisen oder über den Dateneingang einen Benutzerbefehl empfangen. Zusätzlich oder alternativ kann auch die Bewegtbildkamera eine entsprechende Eingabeeinrichtung umfassen. Die Position der Darstellung der Kamerainformationen an der Anzeigeeinrichtung kann basierend auf der Benutzereingabe modifiziert werden, beispielsweise damit der Benutzer die Darstellung relativ zu der durch die Datenbrille sichtbaren Bewegtbildkamera an einer Position anordnen kann, an der die Darstellung bei einer jeweiligen Anwendung nicht stört.

Die Steuereinrichtung kann für eine Gestensteuerung ausgebildet sein. Bei manchen Ausführungsformen kann der Benutzer die Position der Darstellung mittels Hand-, Finger- und/oder Kopfbewegungen als Benutzereingaben einstellen, welche von Sensoren, z.B. dem Kameraerfassungssensor, dem Brillenerfassungssensor, dem Beschleunigungssensor und/oder anderen Sensoren, erfasst werden, wobei die Steuereinrichtung dazu ausgebildet ist, basierend auf den erfassten Hand-, Finger- und/oder Kopfbewegungen die Position der Darstellung der Kamerainformationen an der Anzeigeeinrichtung anzupassen. Ferner kann mittels der Eingabeeinrichtung und/oder der Hand-, Finger- und/oder Kopfbewegung zumindest eine der folgenden Aktionen durchgeführt werden: Einstellen einer Größe der Darstellung, Einstellen einer Form der Darstellung, Einstellen einer Art der Kamerainformationen oder Entfernen der Darstellung der Kamerainformationen.

Bei manchen Ausführungsformen umfasst die Datenbrille ferner einen Augenpositionssensor zur Ermittlung einer Position eines Augapfels des Benutzers der Datenbrille, wobei die Steuereinrichtung dazu ausgebildet ist, die Position der Darstellung der empfangenen Kamerainformationen an der Anzeigeeinrichtung basierend auf der ermittelten Position des Augapfels anzupassen. Insbesondere kann die Blickrichtung und/oder Position des Auges relativ zur Position der Datenbrille erfasst werden. Hierdurch kann sichergestellt werden, dass die Position der Darstellung der Kamerainformationen an der Anzeigeeinrichtung der beabsichtigten Position entspricht. Mit anderen Worten wird verhindert, dass dem Benutzer der Datenbrille die Darstellung der Kamerainformationen aufgrund einer unüblichen oder ungewöhnlichen Position der Datenbrille relativ zum Auge, beispielsweise aufgrund einer ungewöhnlichen Positionierung der Datenbrille auf der Nase des Benutzers, an einer unbeabsichtigten Position angezeigt wird.

Bei manchen Ausführungsformen kann der Dateneingang der Datenbrille einen Anschluss für eine Kabelverbindung und/oder eine Funkschnittstelle für eine drahtlose Verbindung mit der Bewegtbildkamera aufweisen.

Ein weiterer Aspekt der Erfindung betrifft ein Bewegtbildkamerasystem, umfassend: zumindest eine Bewegtbildkamera mit einem Kamerakörper, der ein Kameragehäuse, einen Objektivanschluss zum Anschließen eines Wechselobjektivs und einen elektronischen Bildsensor aufweist; und zumindest eine Datenbrille nach einer der vorstehenden Ausführungsformen.

Die Datenbrille ist über den Dateneingang mit der Bewegtbildkamera verbunden. Die Bewegtbildkamera kann einen dem Dateneingang der Datenbrille zugeordneten Datenausgang umfassen. Grundsätzlich ist eine bidirektionale Kommunikation möglich. Wie vorstehend beschrieben kann die Datenübertragung zwischen der Datenbrille und der Bewegtbildkamera kabelgebunden, z.B. via USB, HDMI oder Ethernet, oder kabellos, z.B. via Wi-Fi, Bluetooth, Infrarot, WLAN oder ZigBee, erfolgen.

Bei manchen Ausführungsformen umfasst das Bewegtbildkamerasystem mehrere Bewegtbildkameras, wobei die Datenbrille dazu ausgebildet ist, für jede Bewegtbildkamera eine Darstellung der von der jeweiligen Bewegtbildkamera empfangenen Kamerainformationen an der Anzeigeeinrichtung anzuzeigen. Beispielsweise können die Bewegtbildkameras jeweilige Markierungen umfassen, mittels derer die Datenbrille die mehreren Bewegtbildkameras im Sichtfeld des Benutzers identifizieren kann. Die Datenbrille kann ferner dazu ausgebildet sein, basierend auf der Identifikation einer jeweiligen Bewegtbildkamera zugehörige, kameraspezifische Darstellungen an der Anzeigeeinrichtung anzuzeigen. Die kameraspezifischen Darstellungen entsprechen dabei den Darstellungen der von einer jeweiligen Bewegtbildkamera empfangenen Kamerainformationen.

Beispielsweise können sich eine erste und eine zweite Bewegtbildkamera im Sichtfeld des Benutzers der Datenbrille befinden, wobei die Steuereinrichtung der Datenbrille dazu ausgebildet sein kann, basierend auf den Markierungen auf der ersten und zweiten Bewegtbildkamera zu erkennen, dass sich zwei Bewegtbildkameras im Sichtfeld des Benutzers befinden, und basierend auf der Markierung, insbesondere den Identifizierungsinformationen, der jeweiligen Bewegtbildkamera die aufgenommenen Bilder, d.h. das Kamerabild, der jeweiligen Bewegtbildkamera in einer vorbestimmten räumlichen Beziehung zur entsprechenden Bewegtbildkamera an der Anzeigeeinrichtung anzuzeigen. Dem Benutzer der Datenbrille wird somit das Kamerabild beider Bewegtbildkameras, insbesondere gleichzeitig, an der Anzeigeeinrichtung angezeigt. Entsprechend kann dem Benutzer der Datenbrille auch eine jeweilige Darstellung der von mehreren Bewegtbildkameras empfangenen Kamerainformationen selektiv, insbesondere nicht gleichzeitig, angezeigt werden, wenn diese Bewegtbildkameras alternierend in das Sichtfeld der Datenbrille gelangen. Die kameraspezifischen Darstellungen sind dabei nicht auf das jeweilige Kamerabild der entsprechenden Bewegtbildkamera beschränkt. Vielmehr können alle Arten von geeigneten kameraspezifischen Darstellungen an der Anzeigeeinrichtung angezeigt werden.

Bei manchen Ausführungsformen umfasst das Bewegtbildkamerasystem mehrere Datenbrillen, wobei die mehreren Datenbrillen dazu ausgebildet sind, basierend auf einer jeweiligen voreingestellten Datenbrillenkonfiguration unterschiedliche Darstellungen der empfangenen Kamerainformationen an der jeweiligen Anzeigeeinrichtung anzuzeigen. Jede Datenbrille kann beispielsweise einer bestimmten Benutzergruppe entsprechend konfiguriert sein. Alternativ kann jede Datenbrille dazu konfiguriert sein, beispielsweise basierend auf einer ermittelten Distanz der jeweiligen Datenbrille zur Bewegtbildkamera, die jeweilige Datenbrillenkonfiguration automatisch anzupassen. Die Distanz einer jeweiligen Datenbrille zur Bewegtbildkamera kann den vorstehenden Ausführungen entsprechend ermittelt werden.

Bei manchen Ausführungsformen umfasst das Bewegtbildkamerasystem ferner eine Fernbedieneinheit für eine Fernbedienung der Bewegtbildkamera, wobei die Steuereinrichtung der Datenbrille dazu ausgebildet ist, wahlweise eine weitere Positionsbeziehung zu ermitteln, die eine Position und/oder Ausrichtung der Datenbrille relativ zu der Fernbedieneinheit angibt, und die Position der Darstellung der empfangenen Kamerainformationen an der Anzeigeeinrichtung basierend auf der weiteren Positionsbeziehung anzupassen.

Hierzu kann die Fernbedieneinheit zumindest teilweise die gleichen Merkmale wie die Bewegtbildkamera aufweisen, sodass die Datenbrille auf dieselbe Weise mit der Fernbedieneinheit interagieren kann, wie in den vorstehenden Ausführungsformen mit der Bewegtbildkamera.

Bei manchen Ausführungsformen kann die Fernbedieneinheit ferner dazu ausgebildet sein, Fernbediensignale an die Bewegtbildkamera zu übertragen, z.B. für einen Beginn oder ein Ende einer Aufnahme, zur Änderung von Aufnahmeparametern, wie etwa einer Belichtungszeit, eines Fokuswerts, eines Irisblendenwerts und/oder der Brennweite des Objektivs der Bewegtbildkamera und/oder zur Änderung einer räumlichen Ausrichtung der Bewegtbildkamera bei Verwendung einer Antriebseinrichtung. Insbesondere kann die Fernbedieneinheit eine dem Kameragehäuse entsprechende Gehäuseform aufweisen.

Bei manchen Ausführungsformen kann die Fernbedieneinheit wenigstens einen Sensor zur Erfassung von Bewegungen aufweisen, insbesondere von Nick- und Schwenkbewegungen, wobei entsprechende Fernbediensignale erzeugt und an die Bewegtbildkamera oder eine Antriebseinrichtung, an der die Bewegtbildkamera montiert ist, übermittelt werden. Somit kann durch Bewegen der Fernbedieneinheit die Ausrichtung der Bewegtbildkamera mittels der Antriebseinrichtung gesteuert werden. Zugleich kann der Benutzer in der Sucherbetriebsart die von der Bewegtbildkamera aufgenommenen Bilder durch die Datenbrille betrachten und hierdurch die Bewegung der Bewegtbildkamera überwachen. Die Nutzung einer Datenbrille in Verbindung mit einer Fernbedieneinheit bietet den Vorteil, dass die Kamera so bedient werden kann, als stünde sie beim Benutzer, jedoch ohne, dass ihre Anzeigen als Teil der Fernbedieneinheit dupliziert werden müssen.

Bei manchen Ausführungsformen weist die Bewegtbildkamera, wie bereits erwähnt, einen Brillenerfassungssensor auf, der dazu ausgebildet ist, die Position und/oder Ausrichtung der Datenbrille relativ zu der Bewegtbildkamera zu erfassen. Die Steuereinrichtung der Datenbrille kann dazu ausgebildet sein, die Positionsbeziehung basierend auf Signalen des Brillenerfassungssensors zu ermitteln, insbesondere durch direkte Verwendung oder durch Auswertung der Signale des Brillenerfassungssensors. Die Signale des Brillenerfassungssensors können hierzu, beispielsweise über den Datenausgang des Bewegtbildkamera, an den Dateneingang der Datenbrille gesendet werden. Ferner kann der Brillenerfassungssensor z.B. eine Hilfskamera umfassen. Bei manchen Ausführungsformen kann die Datenbrille eine oder mehrere optische Markierungen aufweisen, welche von dem Brillenerfassungssensor erfasst werden, um die Position und/oder Ausrichtung der Datenbrille relativ zu der Bewegtbildkamera zu ermitteln. Die vorstehenden Ausführungen zum Kameraerfassungssensor und den Markierungen an der Bewegtbildkamera gelten hier entsprechend.

Bei manchen Ausführungsformen kann das Kameragehäuse der Bewegtbildkamera wenigstens eine (virtuelle) Projektionsfläche aufweisen, wie vorstehend im Zusammenhang mit der Datenbrille bereits erläutert. Die Steuereinrichtung der Datenbrille kann dazu ausgebildet sein, die Position der Darstellung der empfangenen Kamerainformationen an der Anzeigeeinrichtung derart anzupassen, dass die Darstellung der Projektionsfläche des Kameragehäuses überlagert erscheint. Die Darstellung der empfangenen Kamerainformationen kann der Projektionsfläche des Kameragehäuses, zumindest solange die Bewegtbildkamera sich im Sichtfeld der Datenbrille befindet, überlagert erscheinen. Beispielsweise kann die Darstellung der Kamerainformationen an für den Benutzer der Bewegtbildkamera gewohnten bzw. zu erwartenden Positionen an dem Kameragehäuse der Bewegtbildkamera angezeigt werden. Diese gewohnten Positionen sind beispielsweise Positionen, an denen die Kamerainformationen regelmäßig bei herkömmlichen Bewegtbildkameras vorzufinden sind. Die Projektionsfläche kann ferner auf einem ausklappbaren Erweiterungsteil des Kameragehäuses vorgesehen sein. Beispielsweise kann die Darstellung der Kamerainformationen in einem ausgeklappten Zustand des ausklappbaren Erweiterungsteils auf die Projektionsfläche projiziert werden bzw. der Projektionsfläche überlagert werden. Der Benutzer der Datenbrille erhält somit den Eindruck, als würde die Darstellung der Kamerainformationen tatsächlich auf der Projektionsfläche, beispielsweise wie auf einem realen Display, angezeigt werden.

Ein Vorteil dieser Form der Darstellung ist, dass die Oberfläche der Projektionsfläche so gestaltet werden kann, dass die von der Datenbrille dargestellten Kamerainformationen besonders gut zu erkennen sind, z.B. durch Verwendung einer Oberfläche, die einen hohen Kontrast zu der Darstellung der Kamerainformationen bietet. So kann z.B. die Brille auch in einem halbtransparenten Modus betrieben werden, ohne dass die Erkennbarkeit der Darstellung durch den sichtbaren Hintergrund beeinträchtigt wird.

Ein weiterer Aspekt der Erfindung betrifft ein Verfahren zum Anzeigen von Kamerainformationen, die Statusinformationen, Konfigurationsinformationen und/oder aufgenommene Bilder zumindest einer Bewegtbildkamera umfassen, mittels zumindest einer Datenbrille, mit den Schritten:
Ermitteln einer Positionsbeziehung, die eine Position und/oder Ausrichtung der Datenbrille relativ zu der Bewegtbildkamera angibt; und
Anzeigen einer Darstellung der Kamerainformationen an einer Anzeigeeinrichtung der Datenbrille basierend auf der ermittelten Positionsbeziehung.

Die Positionsbeziehung kann beispielsweise, wie vorstehend beschrieben, basierend auf Sensorsignalen ermittelt werden. Bei manchen Ausführungsformen umfasst das Ermitteln der Positionsbeziehung ferner eine Berechnung der Positionsbeziehung basierend auf einem Time-of-Flight-Verfahren und/oder einem FMCW-Verfahren. Ferner kann das Ermitteln der Positionsbeziehung und/oder das Anzeigen der Darstellung, insbesondere die Ermittlung der Position der Darstellung an der Anzeigeeinrichtung, basierend auf einem Machine Learning Modell, insbesondere einem neuronalen Netz, erfolgen, welches beispielsweise mit geeigneten Daten, z.B. mit gesammelten Positionsbeziehungsdaten von Testnutzern einer Datenbrille, vortrainiert wurde. Alternativ kann das Anzeigen der Darstellung der Kamerainformationen an der Anzeigeeinrichtung und insbesondere die Ermittlung der Position der Darstellung der Kamerainformationen an der Anzeigeeinrichtung basierend auf einer Nachschlagetabelle erfolgen. Die Nachschlagetabelle kann beispielsweise für jede Position und/oder Ausrichtung der Datenbrille und/oder Bewegtbildkamera eine dieser Position und/oder Ausrichtung entsprechende Position der Darstellung der Kamerainformationen an der Anzeigeeinrichtung enthalten.

Für das Bewegtbildkamerasystem und das Verfahren gelten die Ausführungen zu der Datenbrille entsprechend, dies gilt insbesondere hinsichtlich Vorteilen und Ausführungsformen.

Grundsätzlich ist, soweit nicht anders angegeben, jede Kombination der vorstehenden Ausführungsformen möglich.

Nachfolgend wird die Erfindung rein beispielhaft unter Bezugnahme auf die Zeichnungen dargestellt. Es zeigen:
- Fig. 1: eine Seitenansicht einer Bewegtbildkamera gemäß dem Stand der Technik;
- Fig. 2: eine erste Ausführungsform eines Bewegtbildkamerasystems mit einer Datenbrille;
- Fig. 3: eine zweite Ausführungsform des Bewegtbildkamerasystems mit der Datenbrille;
- Fig. 4: eine dritte Ausführungsform des Bewegtbildkamerasystems mit der Datenbrille;
- Fig. 5A und 5B: eine vierte Ausführungsform des Bewegtbildkamerasystems mit der Datenbrille; und
- Fig. 6A und 6B: eine fünfte Ausführungsform des Bewegtbildkamerasystems mit der Datenbrille.

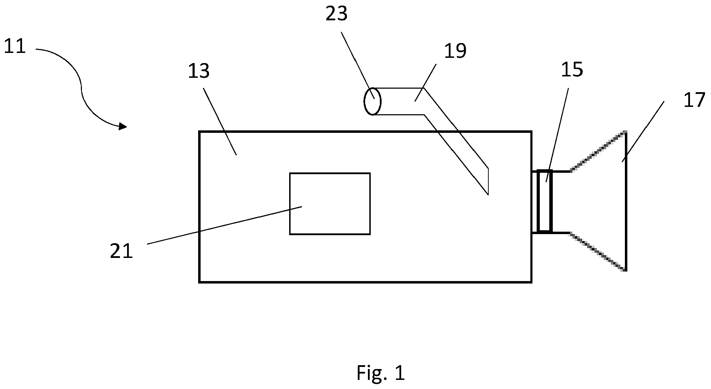

Fig. 1 zeigt eine Seitenansicht einer Bewegtbildkamera 11, wie sie aus dem Stand der Technik bekannt ist. Die Bewegtbildkamera 11 umfasst ein Kameragehäuse 13, einen Objektivanschluss 15 zum Anschließen eines Wechselobjektivs 17 sowie einen an dem Kameragehäuse befestigten Sucher 19 und ein an dem Kameragehäuse 13 befestigtes Display 21. Ein Benutzer der Bewegtbildkamera 11 hat die Möglichkeit, über den Sucher 19 oder das Display 21 das von der Bewegtbildkamera 11 aufgenommene Bild 43 in Echtzeit zu verfolgen. Möchte der Benutzer das aufgenommene Bild 43 der Bewegtbildkamera 11 über den Sucher 19 verfolgen, so positioniert er ein Auge an einer Augenmuschel 23 des Suchers 19, sodass er über das entsprechende Auge das aufgenommene Bild 43 der Bewegtbildkamera 11 betrachten kann. Alternativ kann er das aufgenommene Bild 43 und/oder weitere Kamerainformationen, wie beispielsweise Statusinformationen der Bewegtbildkamera und/oder Konfigurationsinformationen der Bewegtbildkamera, auf dem Display 21 betrachten.

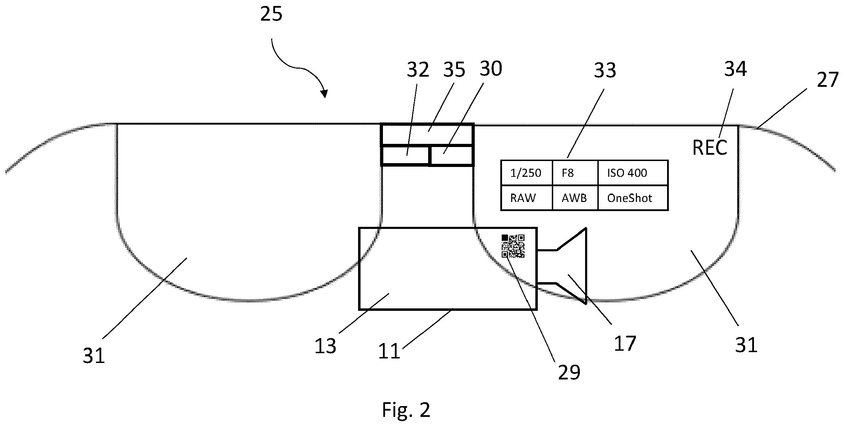

Fig. 2 zeigt eine erste Ausführungsform eines Bewegtbildkamerasystems 25 mit einer Datenbrille 27 und einer (hiervon separaten) Bewegtbildkamera 11, wobei durch die Datenbrille 27 eine Seitenansicht der Bewegtbildkamera 11 zu sehen ist.

In Fig. 2 wird die Datenbrille in einer Beobachtungsbetriebsart betrieben, in der die Anzeigeeinrichtung 31 zumindest teilweise transparent ist, sodass eine reale Umgebung der Datenbrille einschließlich der Bewegtbildkamera 11 durch die Anzeigeeinrichtung 31 hindurch wahrnehmbar ist. Die Anzeigeeinrichtung 31 ist hinsichtlich ihrer Lichtdurchlässigkeit und hinsichtlich einer Wiedergabe von Information steuerbar. Die Anzeigeeinrichtung 31 kann beispielsweise für die zwei Augen des Benutzers zwei Brillengläser, insbesondere sogenannte intelligente Gläser (Smart Glasses) umfassen.

An dem Kameragehäuse 13 der Bewegtbildkamera 11 ist eine optische Markierung in Form eines QR-Codes 29 angeordnet. Wie in Fig. 2 dargestellt, zeigt die Datenbrille 27 in Reaktion auf eine Erkennung des QR-Codes 29 auf dem Kameragehäuse 13 einem Benutzer 45 der Datenbrille 27 an einer Anzeigeeinrichtung 31 Kamerakonfigurationsinformationen 33 an, beispielsweise eine Verschlusszeit, eine Blendenöffnung, eine ISO-Empfindlichkeit, ein Dateiformat, Informationen zum Weißabgleich und eine Aufnahmeart, insbesondere als numerische oder textliche Informationen. Die Datenbrille 27 umfasst eine Steuereinrichtung 30, die über einen Dateneingang 32 die Kamerakonfigurationsinformationen 33 von der Bewegtbildkamera 11 per Funk empfängt und die Anzeigeeinrichtung 31 entsprechend ansteuert. Die Konfigurationsinformationen 33 werden an der Anzeigeeinrichtung 31 nur angezeigt, wenn sich der QR-Code 29 im Blickfeld des Benutzers 45 der Datenbrille 27 befindet. Ferner werden die Kamerakonfigurationsinformationen 33 in einem Bereich an der Anzeigeeinrichtung 31 dargestellt, in welchem die Abbildung der Bewegtbildkamera 11 (in der Wahrnehmung durch den Benutzer der Datenbrille 27) nicht angeordnet ist. Ein beispielsweise im Brillensteg angeordneter Kameraerfassungssensor 35 erfasst dabei den QR-Code 29 und insbesondere die Position des QR-Codes 29 auf dem Kameragehäuse 13 und übermittelt entsprechende Signale an die Steuereinrichtung 30.

Basierend auf der erfassten Position des QR-Codes 29 auf dem Kameragehäuse 13 ermittelt die Steuereinrichtung 30 eine Positionsbeziehung, welche die Position und Ausrichtung der Datenbrille 27 relativ zu der Position und Ausrichtung der Bewegtbildkamera 11 angibt, um hierdurch die Kopfposition und Blickrichtung des Benutzers relativ zu der Bewegtbildkamera 11 zu identifizieren. Basierend auf dieser Positionsbeziehung ordnet die Steuereinrichtung 30 durch entsprechende Steuerung der Anzeigeeinrichtung 31 die Darstellung der Kamerakonfigurationsinformationen 33 in einem Bereich auf der Anzeigeeinrichtung 31 an, in dem die Abbildung der Bewegtbildkamera 11 nicht angeordnet ist, wobei die Darstellung der Kamerakonfigurationsinformationen 33 jedoch in einer vorbestimmten räumlichen Beziehung zu der Bewegtbildkamera 11 angeordnet ist. Beispielsweise erscheint bei dem Ausführungsbeispiel gemäß Fig. 2 die Darstellung der Kamerakonfigurationsinformationen 33 schräg oberhalb der Bewegtbildkamera 11. Diese räumliche Beziehung wird an der Anzeigeeinrichtung 31 in der Wahrnehmung durch den Benutzer beibehalten, selbst wenn der Benutzer seine Kopfposition und/oder Blickrichtung ändert. Wenn also durch eine Änderung der Kopfposition und/oder Blickrichtung die Abbildung der Bewegtbildkamera 11 sich entlang der Anzeigeeinrichtung 31 bewegt, sorgt die Steuereinrichtung 30 dafür, dass auch die Darstellung der Kamerakonfigurationsinformationen 33 entsprechend nachgeführt wird, um die vorbestimmte räumliche Beziehung zu der Bewegtbildkamera 11 beizubehalten.

Grundsätzlich kann das Bewegtbildkamerasystem 25 auch so konfiguriert sein, dass die Darstellung der Kamerakonfigurationsinformationen 33 in einem Bereich der Anzeigeeinrichtung 31 angezeigt wird, in dem die Bewegtbildkamera 11 zu sehen ist, beispielsweise als Überlagerung einer vorbestimmten Projektionsfläche des Kameragehäuses 13. Ferner kann die Datenbrille 27 in einer rechten oberen Ecke an der Anzeigeeinrichtung 31 eine Darstellung von Statusinformationen 34 der Bewegtbildkamera 11 anzeigen, hier beispielsweise, dass sich die Bewegtbildkamera 11 momentan in einem Aufnahmemodus befindet ("REC"). Grundsätzlich kann die Datenbrille 27 jede geeignete Kamerakonfigurationsinformation 33 und/oder Statusinformation 34 der Bewegtbildkamera 11 an der Anzeigeeinrichtung 31 anzeigen.

Die Datenbrille 27 kann ferner einen Augenpositionssensor (wie bereits erläutert) und/oder eine elektrische Energiequelle (z.B. Batterie, Akkumulator, Kondensator) aufweisen (in Fig. 2 nicht dargestellt).

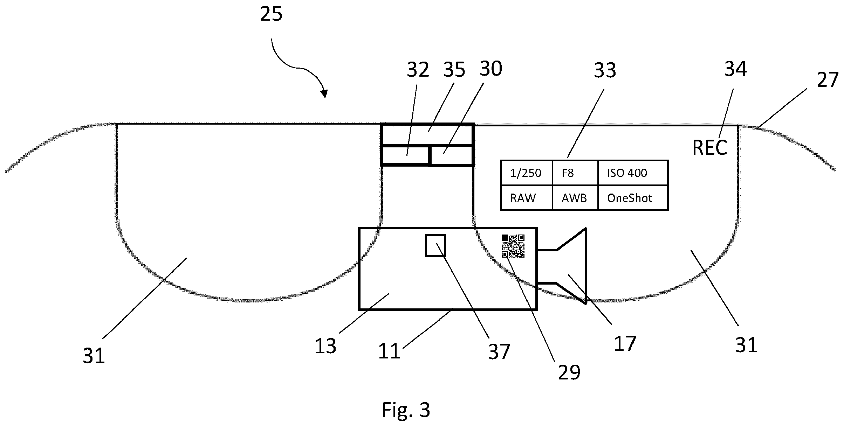

Fig. 3 zeigt eine zweite Ausführungsform des Bewegtbildkamerasystems 25 mit der Datenbrille 27 und der Bewegtbildkamera 11, welches sich von der ersten Ausführungsform der Fig. 2 dahingehend unterscheidet, dass zusätzlich ein im Kameragehäuse 13 verbauter Brillenerfassungssensors 37 die Position und/oder Ausrichtung der Datenbrille 27 relativ zur Position und/oder Ausrichtung der Bewegtbildkamera 11 erfasst. Hierfür ist ein nicht gezeigter QR-Code 29 an der Datenbrille 27, beispielsweise an dem Brillengestell der Datenbrille 27, derart angebracht, dass der Brillenerfassungssensor 37 den QR-Code 29 und damit die Position und/oder Ausrichtung der Datenbrille 27 relativ zur Bewegtbildkamera 11 erfassen kann. Entsprechende Signale werden von dem Brillenerfassungssensor 37, beispielsweise über eine Funkschnittstelle der Bewegtbildkamera 11 und den Dateneingang 32 der Datenbrille 27, an die Steuereinrichtung 30 der Datenbrille 27 übermittelt. Vorteilhaft an dieser Ausführungsform ist es, dass sowohl Positionsdaten des Kameraerfassungssensors 35 als auch Positionsdaten des Brillenerfassungssensors 37 verwendet werden können, um die Positionsbeziehung zwischen Datenbrille 27 und Bewegtbildkamera 11 zu ermitteln, wodurch eine höhere Genauigkeit der Ermittlung der Positionsbeziehung erreicht wird.

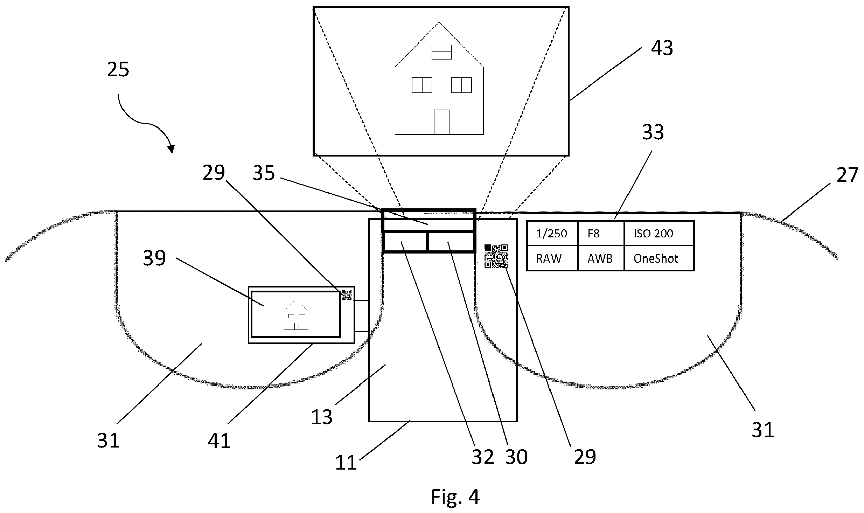

In Fig. 4 ist eine dritte Ausführungsform des Bewegtbildkamerasystems 25 mit der Datenbrille 27 und der Bewegtbildkamera 11 gezeigt. Fig. 4 zeigt eine Rückansicht, d.h. eine Ansicht auf eine dem Wechselobjektiv 17 entgegengesetzte Seite, der Bewegtbildkamera 11, auf die ein Benutzer der Datenbrille 27 blickt. An der Bewegtbildkamera 11 sind zwei QR-Codes 29 angeordnet, welche von dem Kameraerfassungssensor 35 erfasst und zur Ermittlung der Positionsbeziehung und zur Anpassung der Position der Darstellung der empfangenen Kamerainformationen an der Anzeigeeinrichtung 31 verwendet werden. Einer der beiden QR-Codes 29 ist am Kameragehäuse 13 angeordnet, während der andere QR-Code 29 an einer Projektionsfläche 39 eines Erweiterungsteils 41 angeordnet ist. Das Erweiterungsteil 41 kann an dem Kameragehäuse 13 ausklappbar bzw. einklappbar befestigt sein, oder an einem Sucher der Bewegtbildkamera 11 ausklappbar bzw. einklappbar befestigt sein, wie dies beispielsweise für eine reale Anzeigeeinrichtung aus US 9854173 B2 bekannt ist. Basierend auf dem erfassten QR-Code 29 am Kameragehäuse 13 wird, wie bereits in Fig. 2 und Fig. 3 gezeigt, eine Darstellung der Kamerakonfigurationsinformationen 33 in einem Bereich an der Anzeigeeinrichtung 31 angeordnet, in welchem die Bewegtbildkamera 11 nicht angeordnet ist, jedoch in einer vorbestimmten räumlichen Beziehung zu der Bewegtbildkamera 11. Die Darstellung der Kamerakonfigurationsinformationen 33 wird in einer räumlichen Nähe zu dem entsprechenden QR-Code 29 angezeigt. Beispielsweise kann die Darstellung der Kamerakonfigurationsinformationen 33 in einem festen räumlichen Bezug zum entsprechenden QR-Code 29 angezeigt werden.

Des Weiteren wird basierend auf der Erfassung des QR-Codes 29 auf der Projektionsfläche 39 des ausgeklappten Erweiterungsteils 41 eine Darstellung eines aufgenommenen Bildes 43 der Bewegtbildkamera 11 an der Anzeigeeinrichtung 33 derart dargestellt, dass die Darstellung des aufgenommenen Bildes 43 als der Projektionsfläche 39 des Erweiterungsteils 41 überlagert erscheint. Somit scheint es für den Benutzer der Datenbrille 27 so, als sei die Projektionsfläche 39 ein tatsächliches verbautes (ausgeklapptes) Display der Bewegtbildkamera 11. Die Darstellung des aufgenommenen Bildes 43, welche der Projektionsfläche 39 überlagert wird, stellt somit ein virtuelles Display dar. Das aufgenommene Bild 43 der Bewegtbildkamera 11 bzw. die entsprechenden Kamerainformationen können wiederum über einen Datenausgang des Bewegtbildkameral1, beispielsweise per Funk, an den Dateneingang 32 und somit an die Steuereinrichtung 30 der Datenbrille 27 übermittelt werden.

Grundsätzlich kann eine Projektionsfläche 39 zum überlagerten Anzeigen einer Darstellung von Kamerainformationen an der Anzeigeeinrichtung 31 der Datenbrille 27 auch an dem Kameragehäuse 13 selbst angeordnet sein. Ferner kann eine Projektionsfläche auch ohne eine Markierung, wie einen QR-Code 29, identifiziert werden. Beispielsweise können freie Flächen am Kameragehäuse 13 und/oder an zusätzlichen Bauteilen der Bewegtbildkamera 11 allein basierend auf den Signalen des Kameraerfassungssensors 35 erfasst werden (z.B. Hilfskamera mit Bilderkennung). Eine freie Fläche kann beispielsweise als Projektionsfläche 39 genutzt werden, wenn die freie Fläche eine vorbestimmte Mindestgröße aufweist. Ein Vorteil der Verwendung von Projektionsflächen zur Erstellung virtueller Displays liegt darin, dass die angesprochenen Projektionsflächen vielfältig und flexibel eingesetzt werden können. Beispielsweise kann die Darstellung der Kamerainformationen, welche der Projektionsfläche 39 überlagert wird, je nach Bedarf und Anwendung angepasst oder verändert werden.

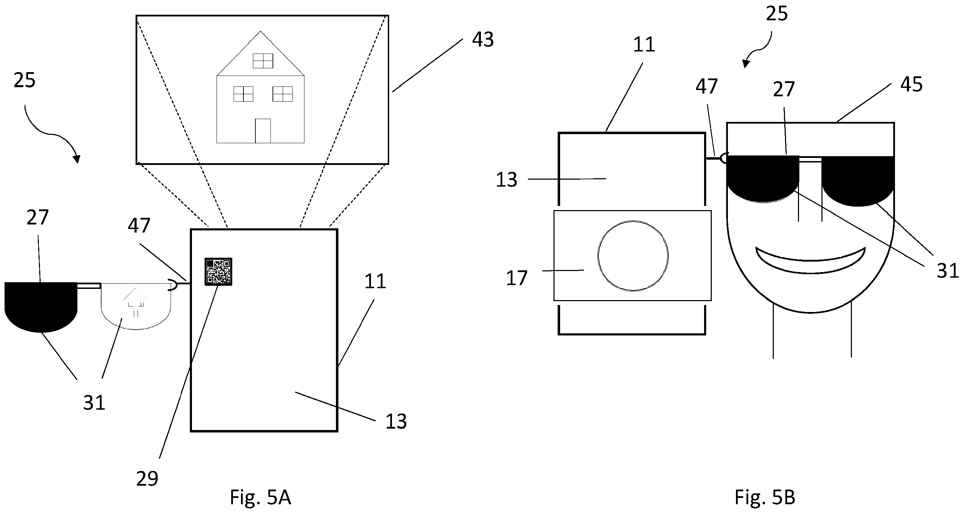

Fig. 5A und 5B zeigen eine vierte Ausführungsform des Bewegtbildkamerasystems 25 mit der Datenbrille 27 und der Bewegtbildkamera 11, wobei in Fig. 5A eine Rückansicht der Bewegtbildkamera 11 und in Fig. 5B eine entsprechende Frontansicht der Bewegtbildkamera gezeigt sind. Der Einfachheit halber sind die Steuereinrichtung 30, der Dateneingang 32 und der Kameraerfassungssensor 35 der Datenbrille 27 hier nicht gezeigt, und der Benutzer 45 der Datenbrille 27 ist nur in Fig. 5B gezeigt.

In Fig. 5A und 5B wird die Datenbrille 27 von dem Benutzer 45 in einer Sucherbetriebsart eingesetzt, in der die Steuereinrichtung die Anzeigeeinrichtung 31 zum Anzeigen einer Darstellung eines aufgenommenen Bildes 43 der Bewegtbildkamera 11 ansteuert, wobei im Falle einer aufgenommenen Bewegtbildsequenz eine Folge von aufgenommenen Bildern 43 wiedergegeben werden kann. Das jeweilige aufgenommene Bild 43 wird nur auf einem, dem Kameragehäuse 13 benachbarten, Glas der Datenbrille 27 bzw. der Anzeigeeinrichtung 31 angezeigt. Das andere Glas der Datenbrille 27 wird in einem vollständig opaken Zustand betrieben, sodass die Lichtmenge, die auf das andere Auge trifft, minimiert wird. Über eine erste (benutzernahe) Anzeigeschicht des anzeigenden Glases der Datenbrille 27 wird das aufgenommene Bild 43 der Bewegtbildkamera 11 angezeigt, während eine entlang der Betrachtungsrichtung hinter der ersten Anzeigeschicht liegende zweite (also benutzerentfernte) Anzeigeschicht der Anzeigeeinrichtung 31 in der Sucherbetriebsart bei beiden Gläsern der Anzeigeeinrichtung 31 vollständig opak geschaltet ist, wie in Fig. 5B dargestellt. Die zweite (benutzerentfernte) Anzeigeschicht kann beispielsweise ein Flüssigkristalldisplay umfassen.

In der Sucherbetriebsart wird eine Sucherfunktion einer herkömmlichen Bewegtbildkamera emuliert, bei der ein Sucher am Kameragehäuse befestigt ist. Auch in der Sucherbetriebsart der Datenbrille 27 soll eine geometrische Beziehung zwischen dem Kopf und dem Blickwinkel des Benutzers 45 einerseits und der Aufnahmeachse der Bewegtbildkamera 11 bzw. der optischen Achse des Wechselobjektivs 27 andererseits bestehen, das Wechselobjektiv 27 der Bewegtbildkamera 11 als ein Fortsatz des eigenen Auges wahrgenommen wird und hierdurch die Ausrichtung und Führung der Bewegtbildkamera 11 erleichtert wird. Hierfür kann die Form der Bewegtbildkamera 11 und insbesondere des Kameragehäuses 13 dazu angepasst sein, eine bestimmte Position und Ausrichtung des Kopfes des Benutzers 45, der an die Bewegtbildkamera 11 angelehnt wird, vorzugeben. Ferner kann ein Gestell 47 an der Bewegtbildkamera 11 angeordnet sein (z.B. lösbar befestigt), in der Sucherbetriebsart eine solche Position und Ausrichtung des Kopfes des Benutzers 45 und/oder der Datenbrille 27 vorgeben.

Die Sucherbetriebsart kann beispielsweise durch eine Berührung oder ein sonstiges Ankoppeln der Datenbrille 27 mit bzw. an dem Gestell 47 der Bewegtbildkamera 11 automatisch gestartet werden. Mittels eines nicht gezeigten Sucherbetriebsart-Auswahlsensors wird eine Berührung der Datenbrille 27 mit und/oder ein Ankoppeln der Datenbrille 27 an dem Gestell 47 der Bewegtbildkamera 11 erkannt, woraufhin die Steuereinrichtung der Datenbrille 27 die Sucherbetriebsart startet. Wird die die Datenbrille 27 von dem Gestell 47 entfernt, beendet die Steuereinrichtung die Sucherbetriebsart, wobei die Datenbrille 27 automatisch in die Beobachtungsbetriebsart übergeht. Durch die detektierbare Kontaktierung der Datenbrille 27 mit einer vorbestimmten Kontaktierungsstelle der Bewegtbildkamera 11 (wie beispielsweise dem Gestell 47) kann der Benutzer 45 in der Sucherbetriebsart eine intuitive, geometrische Beziehung zwischen seinem Kopf und der Aufnahmeachse der Bewegtbildkamera 11 herstellen und zugleich die Sucherbetriebsart auslösen.

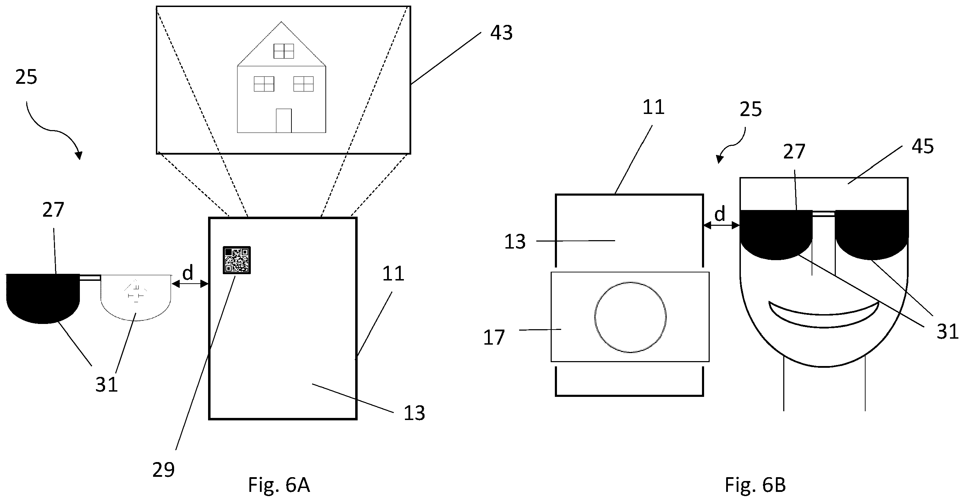

Fig. 6A und 6B zeigen eine fünfte Ausführungsform des Bewegtbildkamerasystems 25 mit der Datenbrille 27 und der Bewegtbildkamera 11, wobei die Datenbrille 27 in der Sucherbetriebsart betrieben wird. Im Unterschied zu der in Fig. 5A und 5B dargestellten Ausführungsform erfolgt die Aktivierung der Sucherbetriebsart hierbei basierend auf einer Annäherung der Datenbrille 27 an die Bewegtbildkamera 11 in eine vorbestimmte Minimaldistanz. Die Sucherbetriebsart wird also automatisch gestartet, sobald die Distanz d zwischen der Datenbrille 27 und der Bewegtbildkamera 11 die vorbestimmte Minimaldistanz erreicht oder unterschreitet. Umgekehrt endet die Sucherbetriebsart bzw. startet die Beobachtungsbetriebsart automatisch, wenn die Distanz d zwischen der Datenbrille 27 und der Bewegtbildkamera 11 die vorbestimmte Minimaldistanz oder eine Auslösedistanz, die größer als die Minimaldistanz ist, überschreitet. Die Erfassung der Distanz zwischen der Datenbrille und der Bewegtbildkamera 11 erfolgt dabei mittels des genannten, nicht gezeigten Sucherbetriebsart-Auswahlsensors.

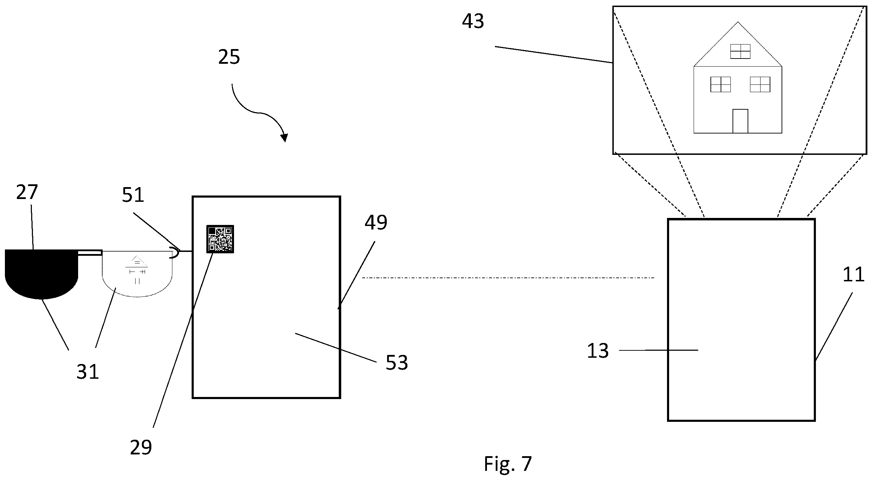

Fig. 7 zeigt eine sechste Ausführungsform des Bewegtbildkamerasystems 25 mit der Datenbrille 27, der Bewegtbildkamera 11 und einer Fernbedieneinheit 49, wobei die Datenbrille 27 in der Sucherbetriebsart betrieben wird. Die Steuereinrichtung der Datenbrille 27 kann bei einer solchen Ausführungsform dazu ausgebildet sein, wahlweise eine weitere Positionsbeziehung zu ermitteln, die eine Position und/oder Ausrichtung der Datenbrille 27 relativ zu der Fernbedieneinheit 49 angibt, wobei die Steuereinrichtung die Position der Darstellung der empfangenen Kamerainformationen (z.B. aufgenommene Bilder 43) an der Anzeigeeinrichtung 31 basierend auf dieser weiteren Positionsbeziehung anpasst. Eine mögliche Anwendung kann beispielsweise darin bestehen, dass die Bewegtbildkamera 11 an einem entfernten Ort angeordnet ist, beispielsweise an einem Kran montiert, wobei die Fernbedieneinheit 49 auch (über entsprechende Aktoren an einer Halterung der Bewegtbildkamera 11) die Position und/oder Ausrichtung der Bewegtbildkamera 11 steuern kann. Bei einer solchen Anwendung kann die Datenbrille 27 mit der Fernbedieneinheit 49 interagieren, welche wiederum als "Verlängerung" der Bewegtbildkamera 11 dient.

Anders als bei den vorstehend dargestellten Ausführungsformen übermittelt die Bewegtbildkamera 11 gemäß Fig. 7 das aufgenommene Bild 43 bzw. die dem aufgenommenen Bild 43 entsprechenden Daten an die Fernbedieneinheit 49, welche wiederum in Kommunikation mit der Datenbrille 27 steht, insbesondere über deren Dateneingang. Wie bereits vorstehend beschrieben zeigt die Datenbrille 27 in der Sucherbetriebsart eine Darstellung des aufgenommenen Bildes 43 auf zumindest einem der Gläser der Anzeigeeinrichtung 31 an. Die Darstellung der Kamerainformationen an der Anzeigeeinrichtung 43 der Datenbrille 27 wird abhängig von der Positionsbeziehung zwischen der Datenbrille 27 und der Fernbedieneinheit 49 eingestellt, d.h. abhängig von der Position und/oder Ausrichtung der Datenbrille 27 relativ zu der Position und/oder Ausrichtung der Fernbedieneinheit 49.

Auch bei einer Ausführungsform gemäß Fig. 7 kann die Sucherbetriebsart durch eine Berührung oder Annäherung der Datenbrille 27 mit bzw. an der Fernbedieneinheit 49 oder einem Gestell 51 der Fernbedieneinheit 49 gestartet werden. Wie für die Bewegtbildkamera 11 gemäß Fig. 5 A und 5 B erläutert, kann die Form der Fernbedieneinheit 49 dazu angepasst sein, eine bestimmte Position und Ausrichtung des Kopfes des Benutzers 45, der an die Fernbedieneinheit 49 angelehnt wird, vorzugeben. Ferner kann das Gestell 51 an der Fernbedieneinheit 49 angeordnet sein (z.B. lösbar befestigt), um in der Sucherbetriebsart eine solche Position und Ausrichtung des Kopfes des Benutzers 45 und/oder der Datenbrille 27 vorzugeben.

Auf dem Gehäuse 53 der Fernbedieneinheit ist als optische Markierung ein QR-Code 29 angebracht, welcher zur Ermittlung der Positionsbeziehung zwischen der Datenbrille 27 und der Fernbedieneinheit 49 verwendet werden kann.

Die Kommunikation zwischen der Fernbedieneinheit 49 und der Bewegtbildkamera 11 erfolgt bidirektional, d.h. die Fernbedieneinheit 49 empfängt nicht nur die dem aufgenommenen Bild 43 entsprechenden Daten von der Bewegtbildkamera 11, sondern sendet auch Steuerbefehle, die der Führung der Fernbedieneinheit 49 durch den Benutzer 45 entsprechen und beispielsweise einen Nick- oder Schwenkbewegung umfassen, an die Bewegtbildkamera 11. Die Bewegtbildkamera 11 kann basierend auf den Steuerbefehlen mittels nicht gezeigter Aktoren, beispielsweise Antriebsmotoren, eine der Führung der Fernbedieneinheit 49 entsprechende Bewegung ausführen. Somit ist der Benutzer 45 des Bewegtbildkamerasystems 11 in der Lage, die Bewegtbildkamera 11 mittels der Datenbrille 27 und der Fernbedieneinheit 49 in einer gewohnten Weise zu steuern bzw. fernzusteuern, wobei die Handhabung einer direkt gehaltenen Bewegtbildkamera 11 nachgebildet werden kann.

Ergänzend zu den vorstehend erläuterten Ausführungsformen ist noch anzumerken, dass die jeweilige Datenbrille 27 auch Kamerainformationen von mehreren Bewegtbildkameras 27 empfangen und an der Anzeigeeinrichtung 31 anzeigen kann. Alternativ oder zusätzlich können mehrere Datenbrillen 27 vorgesehen sein, die unterschiedliche Darstellungen der von derselben Bewegtbildkamera 27 empfangenen Kamerainformationen an der jeweiligen Anzeigeeinrichtung 31 anzeigen. Bei der Verwendung mehrerer Datenbrillen 27 kann also jede einzeln konfiguriert werden, so dass die verschiedenen Benutzer zeitgleich jeweils eine nach individuellem Bedarf angepasste Darstellung der Kamerainformationen wahrnehmen, insbesondere auf ein und derselben Projektionsfläche 39 der Bewegtbildkamera 27.

### Bezugszeichenliste

- 11: Bewegtbildkamera
- 13: Kameragehäuse
- 15: Objektivanschluss
- 17: Wechselobjektiv
- 19: Sucher
- 21: Display
- 23: Augenmuschel
- 25: Bewegtbildkamerasystem
- 27: Datenbrille
- 29: QR-Code
- 30: Steuereinrichtung
- 31: Anzeigeeinrichtung
- 32: Dateneingang
- 33: Kamerakonfigurationsinformationen
- 34: Statusinformation
- 35: Kameraerfassungssensor
- 37: Brillenerfassungssensor
- 39: Projektionsfläche
- 41: Erweiterungsteil
- 43: aufgenommenes Bild
- 45: Benutzer
- 47: Gestell
- 49: Fernbedieneinheit
- 51: Gestell an der Fernbedieneinheit
- 53: Gehäuse der Fernbedieneinheit

## Patentansprüche

1. Datenbrille (27) für eine Bewegtbildkamera (11), mit:
einem Dateneingang (32) zum Empfangen von Kamerainformationen, die Statusinformationen (34) der Bewegtbildkamera (11), Konfigurationsinformationen (33) der Bewegtbildkamera (11) und/oder aufgenommene Bilder (43) der Bewegtbildkamera (11) umfassen;
einer Anzeigeeinrichtung (31), die dazu ausgebildet ist, eine Darstellung der empfangenen Kamerainformationen anzuzeigen; und
einer Steuereinrichtung (30), die dazu ausgebildet ist, eine Positionsbeziehung zu ermitteln, die eine Position und/oder Ausrichtung der Datenbrille (27) relativ zu der Bewegtbildkamera (11) angibt, und eine Position der Darstellung der empfangenen Kamerainformationen an der Anzeigeeinrichtung (31) basierend auf der Positionsbeziehung anzupassen.

2. Datenbrille (27) nach Anspruch 1,
ferner mit zumindest einem Kameraerfassungssensor (35), der dazu ausgebildet ist, die Position und/oder Ausrichtung der Datenbrille (27) relativ zu der Bewegtbildkamera (11) zu erfassen, wobei die Steuereinrichtung (30) dazu ausgebildet ist, die Positionsbeziehung basierend auf Signalen des Kameraerfassungssensors (35) zu ermitteln;
wobei der Kameraerfassungssensor (35) vorzugsweise eine Hilfskamera aufweist, die dazu ausgebildet ist, zumindest eine Markierung (29) an einem Kameragehäuse (13) der Bewegtbildkamera (11) zu erfassen.

3. Datenbrille (27) nach einem der vorstehenden Ansprüche,
wobei die Steuereinrichtung (30) dazu ausgebildet ist, die Position der Darstellung der empfangenen Kamerainformationen an der Anzeigeeinrichtung (31) derart anzupassen, dass die Darstellung in Bezug zur Bewegtbildkamera ortsfest im Raum angeordnet erscheint.

4. Datenbrille (27) nach einem der vorstehenden Ansprüche,
wobei die Anzeigeeinrichtung (31) derart transparent ist, dass zumindest benachbart zu der Darstellung der empfangenen Kamerainformationen eine reale Umgebung der Datenbrille (27) durch die Anzeigeeinrichtung (31) hindurch wahrnehmbar ist, wobei die Steuereinrichtung (30) dazu ausgebildet ist, die Position der Darstellung der empfangenen Kamerainformationen an der Anzeigeeinrichtung (31) derart anzupassen, dass die Darstellung als einem Kameragehäuse (13) der in der realen Umgebung befindlichen Bewegtbildkamera (11) überlagert erscheint.

5. Datenbrille (27) nach einem der vorstehenden Ansprüche,
wobei die Anzeigeeinrichtung (31) wahlweise zwischen einem bereichsweise transparenten Zustand, in dem eine reale Umgebung der Datenbrille (27) durch die Anzeigeeinrichtung (31) hindurch wahrnehmbar ist, und einem bereichsweise opaken Zustand umschaltbar ist, wobei die Steuereinrichtung (30) dazu ausgebildet ist, die Anzeigeeinrichtung (31) in einem Bereich, welcher der Position der Darstellung der empfangenen Kamerainformationen entspricht, zumindest teilweise opak und in anderen Bereichen transparent zu schalten.

6. Datenbrille (27) nach einem der vorstehenden Ansprüche,
wobei die Datenbrille (27) dazu ausgebildet ist, wahlweise eine Beobachtungsbetriebsart oder eine Sucherbetriebsart einzunehmen,
wobei in der Beobachtungsbetriebsart die Anzeigeeinrichtung (31) derart zumindest teilweise transparent ist, dass eine reale Umgebung der Datenbrille (27) durch die Anzeigeeinrichtung (31) hindurch wahrnehmbar ist, wobei die Steuereinrichtung (30) die Anzeigeeinrichtung (31) zum Anzeigen einer Darstellung von Statusinformationen (34) oder Konfigurationsinformationen (33) der Bewegtbildkamera (11) ansteuert; und
wobei in der Sucherbetriebsart die Steuereinrichtung (30) die Anzeigeeinrichtung (31) zum Anzeigen einer Darstellung von aufgenommenen Bildern (43) der Bewegtbildkamera (11) ansteuert.

7. Datenbrille (27) nach Anspruch 6,
wobei die Steuereinrichtung (30) dazu ausgebildet ist, aufgrund eines Signals eines Sucherbetriebsart-Auswahlschalters oder eines Sucherbetriebsart-Auswahlsensors die Sucherbetriebsart einzunehmen, wobei der Sucherbetriebsart-Auswahlsensor dazu ausgebildet ist, eine Berührung zwischen der Datenbrille (27) und der Bewegtbildkamera (11) und/oder eine Annäherung der Datenbrille (27) an die Bewegtbildkamera (11) in eine vorbestimmte Minimaldistanz (d) zu erfassen.

8. Datenbrille (27) nach einem der vorstehenden Ansprüche,
wobei die Anzeigeeinrichtung (31) eine erste Anzeigeschicht und eine zweite Anzeigeschicht umfasst, wobei die erste Anzeigeschicht dazu ausgebildet ist, die Darstellung der empfangenen Kamerainformationen anzuzeigen, und wobei die zweite Anzeigeschicht zumindest bereichsweise zwischen einem transparenten und einem opaken Zustand umschaltbar ist; oder
wobei die Anzeigeeinrichtung (31) eine Anzeigeschicht und einen teildurchlässigen Spiegel umfasst, der dazu abgebildet ist, eine von der Anzeigeschicht angezeigte Darstellung der empfangenen Kamerainformationen in das Sichtfeld eines Benutzers der Datenbrille (27) einzuspiegeln.

9. Datenbrille (27) nach einem der vorstehenden Ansprüche,
wobei die Steuereinrichtung (30) dazu ausgebildet ist, die Darstellung der empfangenen Kamerainformationen an der Anzeigeeinrichtung (31) basierend auf einer Distanz zwischen der Datenbrille (27) und der Bewegtbildkamera (11) anzupassen;
und/oder
wobei die Steuereinrichtung (30) dazu ausgebildet ist, die Position der Darstellung der empfangenen Kamerainformationen an der Anzeigeeinrichtung (31) ferner basierend auf einer Benutzereingabe anzupassen; und/oder
wobei die Datenbrille (27) einen Augenpositionssensor zur Ermittlung einer Position eines Augapfels eines Benutzers der Datenbrille (27) aufweist, wobei die Steuereinrichtung (30) dazu ausgebildet ist, die Position der Darstellung der empfangenen Kamerainformationen an der Anzeigeeinrichtung (31) basierend auf der ermittelten Position des Augapfels anzupassen.

10. Datenbrille (27) nach einem der vorstehenden Ansprüche,
wobei die Statusinformationen (34) der Bewegtbildkamera (11) eine Information über einen Aufnahmemodus der Bewegtbildkamera (11) umfassen; und/oder
wobei die Konfigurationsinformationen (33) der Bewegtbildkamera (11) eine Verschlusszeit, eine Blendenöffnung, eine ISO-Empfindlichkeit, ein Dateiformat, Informationen zum Weißabgleich und/oder eine Aufnahmeart umfassen.

11. Bewegtbildkamerasystem, umfassend:
zumindest eine Bewegtbildkamera (11) mit einem Kamerakörper, der ein Kameragehäuse (13), einen Objektivanschluss (15) zum Anschließen eines Wechselobjektivs (17) und einen elektronischen Bildsensor aufweist; und zumindest eine Datenbrille (27) nach einem der vorstehenden Ansprüche.

12. Bewegtbildkamerasystem (25) nach Anspruch 11,
wobei das Bewegtbildkamerasystem (25) mehrere Bewegtbildkameras (27) umfasst, wobei die Datenbrille (27) dazu ausgebildet ist, für jede der mehreren Bewegtbildkameras (27) eine jeweilige Darstellung der von der jeweiligen Bewegtbildkamera (27) empfangenen Kamerainformationen an der Anzeigeeinrichtung (31) anzuzeigen;
und/oder
wobei das Bewegtbildkamerasystem (25) mehrere Datenbrillen (27) umfasst, wobei die mehreren Datenbrillen (27) dazu ausgebildet sind, basierend auf einer jeweiligen voreingestellten Datenbrillenkonfiguration unterschiedliche Darstellungen der empfangenen Kamerainformationen an der jeweiligen Anzeigeeinrichtung (31) anzuzeigen.

13. Bewegtbildkamerasystem (25) nach Anspruch 11 oder 12,
wobei das Bewegtbildkamerasystem (25) ferner eine Fernbedieneinheit (49) für eine Fernbedienung der Bewegtbildkamera (11) umfasst, wobei die Steuereinrichtung (30) der Datenbrille (27) dazu ausgebildet ist, wahlweise eine weitere Positionsbeziehung zu ermitteln, die eine Position und/oder Ausrichtung der Datenbrille (27) relativ zu der Fernbedieneinheit (49) angibt, und die Position der Darstellung der empfangenen Kamerainformationen an der Anzeigeeinrichtung (31) basierend auf der weiteren Positionsbeziehung anzupassen;
und/oder
wobei die Bewegtbildkamera (11) einen Brillenerfassungssensor (37) aufweist, der dazu ausgebildet ist, die Position und/oder Ausrichtung der Datenbrille (27) relativ zu der Bewegtbildkamera (11) zu erfassen, wobei die Steuereinrichtung (30) der Datenbrille (27) dazu ausgebildet ist, die Positionsbeziehung basierend auf Signalen des Brillenerfassungssensors (37) zu ermitteln.

14. Bewegtbildkamerasystem (25) nach einem der Ansprüche 11 bis 13, wobei das Kameragehäuse (13) der Bewegtbildkamera (11) wenigstens eine Projektionsfläche (39) aufweist, wobei die Steuereinrichtung (30) der Datenbrille (27) dazu ausgebildet ist, die Position der Darstellung der empfangenen Kamerainformationen an der Anzeigeeinrichtung (31) derart anzupassen, dass die Darstellung als der Projektionsfläche (39) des Kameragehäuses (13) überlagert erscheint.

15. Verfahren zum Anzeigen von Kamerainformationen, die Statusinformationen (34), Konfigurationsinformationen (33) und/oder aufgenommene Bilder (43) zumindest einer Bewegtbildkamera (11) umfassen, mittels zumindest einer Datenbrille (27), mit den Schritten:
Ermitteln einer Positionsbeziehung, die eine Position und/oder Ausrichtung der Datenbrille (27) relativ zu der Bewegtbildkamera (11) angibt; und
Anzeigen einer Darstellung der Kamerainformationen an einer Anzeigeeinrichtung (31) der Datenbrille (27) basierend auf der ermittelten Positionsbeziehung.
